(19) **Europäisches Patentamt / European Patent Office / Office européen des brevets**

(11) **EP 1 768 835 B1**

(12) **EUROPEAN PATENT SPECIFICATION**

(45) Date of publication and mention
of the grant of the patent:
**29.10.2008 Bulletin 2008/44**

(21) Application number: **05776524.0**

(22) Date of filing: **21.07.2005**

(51) Int Cl.:
**B29D 11/00** $^{(2006.01)}$    **B29C 33/00** $^{(2006.01)}$

(86) International application number:
**PCT/US2005/025970**

(87) International publication number:
**WO 2006/012471 (02.02.2006 Gazette 2006/05)**

(54) **PREDICTIVE METHOD OF ASSIGNING POWER TO AN OPHTHALMIC LENS OR LENS LOT**

PRÄDIKTIVES VERFAHREN ZUR STROMZUWEISUNG FÜR EINE OPHTHALMISCHE LINSE ODER EIN LINSENTEIL

PROCEDE PREDICTIF POUR ATTRIBUER UNE PUISSANCE A UNE LENTILLE OPHTALMIQUE OU UN LOT DE LENTILLES

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.07.2004  US 896517**

(43) Date of publication of application:
**04.04.2007  Bulletin 2007/14**

(73) Proprietor: **BAUSCH & LOMB INCORPORATED**
**Rochester, NY 14604-2701 (US)**

(72) Inventors:
• **KEENA, Dermot**
**Linlithgow Scotland EH49 6BY (GB)**

• **MOONEY, Gerry**
**Waterford (IE)**
• **GIALLOMBARDO, John, D.**
**Rochester, NY 14625 (US)**

(74) Representative: **Maiwald, Walter et al**
**Maiwald Patentanwalts GmbH**
**Elisenhof**
**Elisenstrasse 3**
**80335 München (DE)**

(56) References cited:
**EP-A- 0 687 551       US-A- 5 122 314**
**US-A- 5 244 371**

## Description

Background of the Invention

The present invention relates to determining and assigning the power of refraction to an ophthalmic lens such as a contact lens or intraocular lens, for example. More particularly, the present invention relates to a method of accurately deriving and assigning a power to an ophthalmic lens or lens lot from the tool used to manufacture the mold from which the lens was formed. EP-A-687 551 describes making lenses using power insert tools.

In the field of ophthalmic lens manufacture, and particularly in present day contact lens manufacture, a required step to measure the refractive power of the lens so that the lens power may be accurately labeled for sale. Contact lenses are offered for sale in a range of corrective powers to compensate for the patient's myopia (nearsightedness) or hypermetropia (farsightedness). The power of the lens is normally given in units of diopters, typically in 0.25 diopter increments. Instruments used to measure the power of the lens are known as may be seen in the following patents:

U.S. Pat. No. 3,985,445 issued Oct. 12, 1976 to Essilor International
U.S. Pat. No. 4,283,139 issued Aug. 11, 1981 to American Optical Corporation
U.S. Pat. No. 5,175,594 issued Dec. 29. 1992 to Allergan Humphery
U.S. Pat. No. 5,123,735 issued Jun. 23, 1992 to Bausch & Lomb Incorporated
U.S. Pat. No. 5,432,596 issued Jul. 11, 1995 to Nidek Co.

As the foregoing patents show, a common method of measuring and assigning the refractive power of a lens involves direct measurement of the lens itself. Challenges in directly measuring the lens are particularly seen when the contact lens is made from a hydrophilic material such as a hydrogel. When in the hydrated state, the lens is flexible and difficult to handle which many times translates into power measurement errors.

Another method for determining the power of a lens is to measure the mold radius of the mold parts used to fabricate the lens. Since the optical surfaces of the mold parts form the optical surfaces of the lens, the power of the lens may be calculated by measuring the mold radii. This requires direct measurement of the mold radius prior to molding the lens therein since it is known that mold parts will undergo dimensional changes over time due to material shrinkage. While power determination and assignment through direct measurement of the lens and mold parts themselves have been used with success in the past, there remains a need for an improved, more cost efficient and potentially more accurate method of determining and assigning the power to a lens in a manufacturing setting.

Summary of the Invention

The present invention addresses the above need by providing methods of determining and assigning power to a lens or lens lot by deriving the power thereof from the tool that made the mold in which the lens was cast according to the claims.

A presently common method of manufacturing contact lenses is cast molding in a mold comprising a female and male mold parts. The female mold part has a concave optical surface and the male mold part has a convex optical surface. Liquid lens material is dispensed in the concave surface of the female mold part and the male mold part is seated thereon. The facing female and male mold surfaces together define a mold cavity in which the contact lens material is cured and formed into a lens. The mold parts themselves are typically made by injection molding and are used only once. They may be made of any plastic material, with polypropylene (PP) and polyvinylchloride (PVC) being common materials from which the mold parts are formed.

In the injection mold machine which forms the mold parts, a female metal tool insert having a precise convex optical surface forms the female optical surface of the female mold part. Likewise, a male metal tool insert having a precise concave optical surface forms the male optical surface of the male mold part. The optical surfaces of the female and male mold parts form the optical surfaces of the respective female (anterior-convex) and male (posterior-concave) surfaces of the lens and must therefore be precisely formed. The optical surfaces of the metal tool inserts are typically machined with a diamond turned lathe and polished to achieve their precise optical surface.

It will thus be appreciated that the relationship between the optical front curve of a contact lens, as formed by the optical radius of the female mold part, and the optical base curve of the contact lens, as formed by the optical radius of the male mold part, determines the contact lens refractive power. The present inventors recognized that the power of the lens may be determined, not only by measuring the lens or mold parts themselves as is the prevalent practice today, but also by measuring the radii of the female and male optical tools used to make the female and male mold parts that form the lens. This has been accurately accomplished by utilizing a linear regression model of the optical tool radii versus lens power as is discussed in more detail below. This method of lens power determination and assignment removes the need to directly handle and measure the lens or mold parts in a manufacturing line which greatly reduces manufacturing time and costs and makes the lens power determination and assignment operation more reliable.

Brief Description of the Drawing

Figure 1 is an elevational view of an exemplary mold pair prior to assembly used to make a contact lens;
Figure 2 is the view of Fig. 1 showing the mold pair in their assembled form;
Figure 3 is a side elevational view of a contact lens cast in the mold assembly of Figs. 1 and 2;
Figures 4A and 4B are perspective views of a female and male mold insert used in an injection mold machine, respectively; and
Figure 5 is a flow chart showing the basic inventive process.

Detailed Description

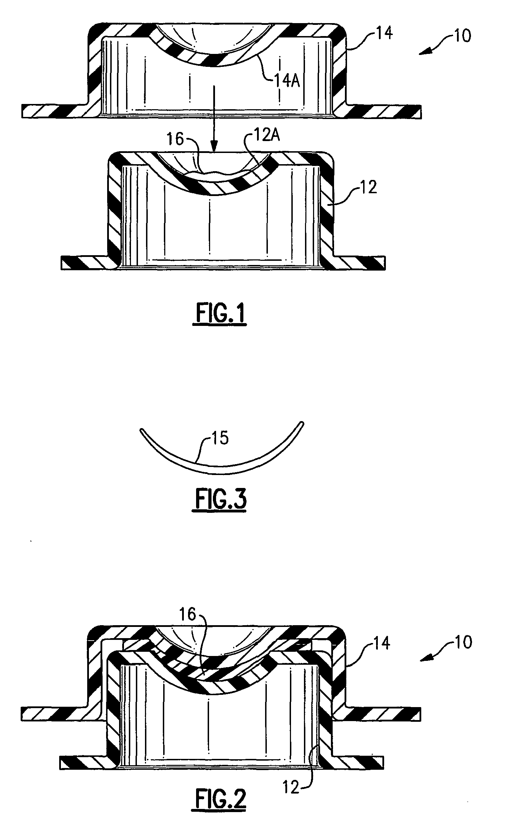

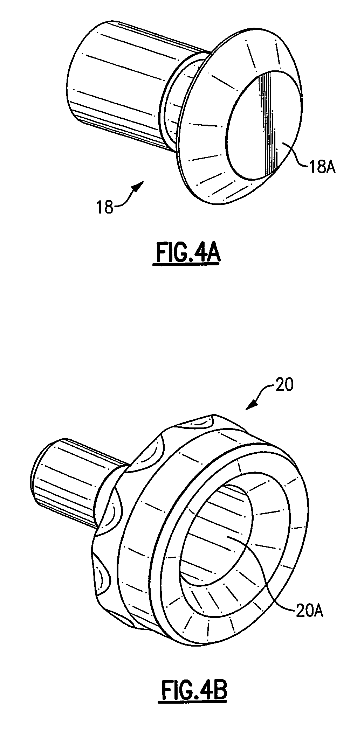

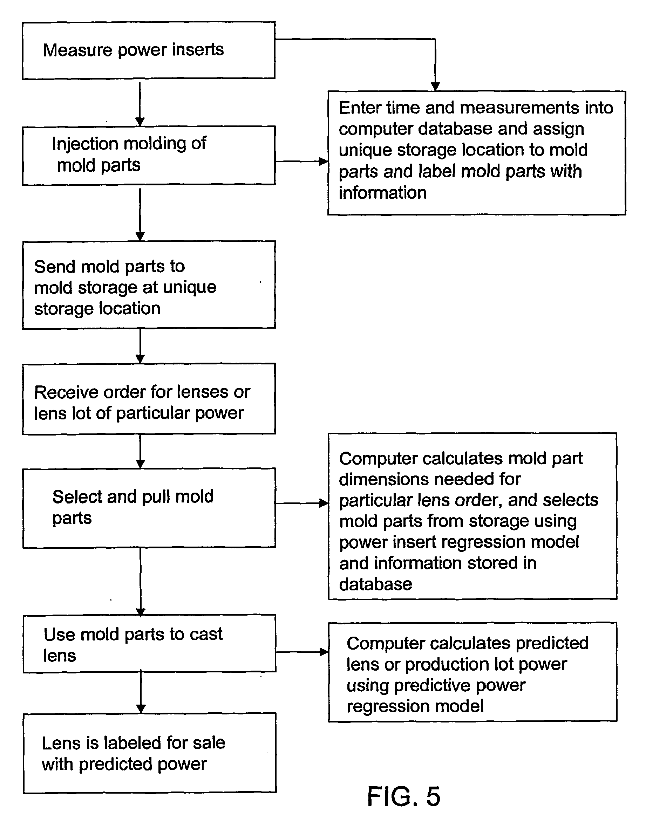

Referring now to the drawing, there is seen in Figures 1-3 an exemplary contact lens mold 10 for making a contact lens 15. Mold 10 includes a female or anterior mold part 12 having concave optical surface 12A and male or posterior mold part 14 having convex optical surface 14A. To cast a lens 15, liquid lens material 16 is dispensed into anterior concave optical surface 12A and posterior convex optical surface 14A is seated thereon. The mold assembly is subjected to a curing cycle to form the lens 15.
As seen in Fig. 4A a female (anterior) power tool insert 18 is provided having a convex optical surface 18A for making the concave optical surface 12A of female mold part 12 seen in Figs. 1 and 3. Additionally, a male (posterior) power tool insert 20 is provided having a concave optical surface 20A is seen in Fig. 4B for making the convex optical surface 16A of male mold part 16 in Figs. 1 and 3. The power inserts 18, 20 are used in an injection mold machine (not shown) to make the mold parts 12, 14 out of an appropriate material such as polypropylene or polyvinylchloride (PVC), for example.
Following manufacture of the mold parts 12, 14, a lens 15 may be made by dispensing a quantity of liquid lens material 16 into the concave surface of the female mold part 12 and seating the male mold part 14 upon the female mold part. The lens material is then subjected to a curing cycle resulting in a lens 15 being formed.
Once a mold part 12, 14 is ejected from the injection mold machine, the mold part will undergo dimensional changes over time due to shrinkage of the mold material as it cools. The period of time that goes by between the making of the mold parts and the use of the mold parts to cast a lens typically ranges between 2 to 48 hours in a process particularly in the case of polypropylene molds. Changes in the dimensions of the optical surfaces of the mold parts will of course translate into changes in the resultant lens surfaces formed by the mold parts. This creates less certainty as to whether the lens to be manufactured will in fact have the refractive power that was intended. By studying and understanding mold shrinkage rates, a regression model may be used for determining the rate of mold shrinkage over time. As explained previously, in order to ensure the lens is of the correct power, prior practice required measurement of the mold immediately prior to molding the lens, or measuring the power of the lens directly.
The present invention provides a method of ensuring that the mold parts to be used to make a lens of a specific power are of the correct dimensions to make that lens. Stated another way, the power of a lens to be cast, such as lens 15, is determinable by a method of measuring the optical surface radii of the power inserts 18, 20 which are used to make the mold parts which, in turn, make the lens. Once the radii of the power inserts is known, the power of the lens to be produced by a given mold assembly is thus determinable or predictable by using a regression model of the optical surface radii of the anterior and posterior power inserts versus the lens power.
Thus, in a first aspect, the invention comprises a method of predicting the power of lens 15 or lens lot by first measuring one or more dimensions (e.g., radius and outside diameter offset for the anterior or female power insert, and radius offset, cylinder offset and inside diameter offset for the posterior or male power insert) of mold optical surfaces 12A, 14A. More particularly, as seen in the simplified flow diagram of Fig. 5, the lens manufacturing process begins with the power insert optical surfaces 182A, 20A being measured and input into a database of a computer. Next, female and male mold parts 12, 14 are injection molded using the power inserts. The injection molded mold parts may be assembled into easy to handle groups or bundles and labeled with a human or machine readable code (e.g., bar code or data matrix code) that indicates the time of that particular mold run. At this time, the mold part or mold bundles may be sent to storage. The computer also preferably assigns a unique storage location to the mold part or bundle and includes that information in the database and label. Since the computer knows the power insert dimensions, the time the mold parts were made, and the storage location of the mold parts, the computer will later be able to quickly locate the required mold parts or mold bundles when needed as explained further below.
A mold shrinkage regression model is developed and input into the computer which is used to compute the predicted dimensions of the mold parts given the time they have been in storage. As explained above, the time the mold parts went into storage is input into the computer database and is labeled on the mold part or mold bundle. The computer therefore knows how long particular mold parts or mold bundles have been in storage as well as their respective storage locations.

The mold shrinkage regression model is developed using previously determined actual mold shrinkage data and readily available regression software such as MICROTAB by Microtab, Inc. or EXCEL by Microsoft Corporation. Once the shrinkage regression model is developed and input into the computer, the change in mold surface dimensions, and hence the mold dimensions over time, may be calculated.

When a lens of a particular power is to be manufactured, the computer searches for a mold part or mold bundle in storage that has the correct dimensions to make a lens of that particular power. More specifically, the computer searches its database for the mold parts in storage having the dimensions, as predicted by the storage time and mold shrinkage regression model, that will make the lens of the needed power. Since the computer database and label on the mold part or bundle includes the initial mold dimensions, the time of measurement, and the location in storage of the mold dimensions it is looking for, the computer locates the required mold parts or mold bundles in storage. A mold pick unit may be utilized to physically pull these mold parts from storage. It is preferred that the mold storage and pick system operate on a first-in/first-out basis so that the oldest molds in inventory are used first. Once these mold parts are pulled from storage, the computer searches for the mating mold parts that, when assembled with the first selected mold parts (both an anterior and a posterior mold part are needed), will form a lens of the intended power. Once the mold parts have been identified, the computer utilizes a power regression model to calculate the predicted power of a lens cast with these mold parts.

An example of developing the regression model is as follows:

Method to Apply Regression Analysis to Develop a Power by Tool Radius Model

1. Establish relationship with actual data (this data is for example only).

| Avg. Meas Pwr | Ant Power Insert Rad | Post Power Insert Rad | 1 / Ant Rad | 1 / Pos Rad |
|---|---|---|---|---|
| -0.24 | 6.504 | 7.503 | 0.15375 | 0.13328 |
| -1.01 | 6.402 | 7.451 | 0.15620 | 0.13421 |
| -1.98 | 6.299 | 7.402 | 0.15876 | 0.13510 |
| -3.01 | 6.201 | 7.348 | 0.16126 | 0.13609 |
| -4.00 | 6.098 | 7.299 | 0.16399 | 0.13701 |
| -5.01 | 6.002 | 7.252 | 0.16661 | 0.13789 |

SUMMARY OUTPUT

| *Regression Statistics* | | | | | |
|---|---|---|---|---|---|
| Multiple R | 0.9995 | | | | |
| R Square | 0.9990 | | | | |
| Adjusted R Square | 0.9984 | | | | |
| Standard Error | 0.0724 | | | | |
| Observations | 6 | | | | |

| *ANOVA* | *df* | *SS* | *MS* | *F* | *Significance F* | |
|---|---|---|---|---|---|---|
| Regression | 2 | 16.38 | 8.19 | 1560.82 | 2.97E-05 | |
| Residual | 3 | 0.02 | 0.01 | | | |
| Total | 5 | 16.40 | | | | |

| | *Coefficients* | *Standard Error* | *t Stat* | *P-value* | *Lower 95%* | *Upper 95%* |
|---|---|---|---|---|---|---|
| Intercept | 43.48056 | 57.9816 | 0.7499 | 0.5078 | -141.0429 | 228.0040 |
| 1 / Ant Rad | -440.48291 | 267.3483 | -1.6476 | 0.1980 | -1291.3053 | 410.3395 |

(continued)

| | Coefficients | Standard Error | t Stat | P-value | Lower 95% | Upper 95% |
|---|---|---|---|---|---|---|
| 1 / Pos Rad | 180.66124 | 743.0821 | 0.2431 | 0.8236 | -2184.1600 | 2545.4825 |

2. Model:

$$Y \text{ (Pred Pwr)} = \text{Intercept} + \text{1/Ant Rad Coeff} \times (\text{1/Ant Rad}) + \text{1/Pos Rad Coeff} \times (\text{1/Pos Rad})$$

3. Determine Appropriate Radii to Predict Powers to the nearest 0.25D

| Target Power | Ant Rad Nom | Pos Rad Nom | Pred Power |
|---|---|---|---|
| -0.25 | 6.497 | 7.505 | -0.25 |
| -1.25 | 6.387 | 7.455 | -1.25 |
| -2.25 | 6.280 | 7.400 | -2.25 |
| -3.00 | 6.199 | 7.350 | -3.00 |
| -4.00 | 6.096 | 7.290 | -4.00 |
| -5.00 | 6.004 | 7.260 | -5.00 |

Using the above table, to obtain a target -0.25D power inserts and molds would be manufactured to the following nominals:

a) Ant Nom =
6.497
b) Pos Nom =
7.505

The above applies for any desired SKU within the range of Powers used.

Statistical analysis has shown that this method is accurate at predicting the power of a lens to be produced by a given mold assembly by measuring the power insert radii that formed the given mold parts. As such, further measurement of the molds and/or lens is no longer a necessary step in the manufacturing process. The lens and/or its package may then be labeled with this predicted power for sale without having to be directly measured.

**Claims**

**1.**   A method of assigning power to an ophthalmic lens or lens lot by deriving the power from the radius of the female and male power insert tools used to form the female and male mold halves from which the female and male optical surfaces of the lens or lens lot are formed, respectively, wherein the power of the lens is calculated using a regression model of the radius of the female and male power insert tools versus lens power.

**2.**   The method of claim 1, wherein said female and male power insert tools are used in an injection mold machine to form the female optical surface of the female mold half and the male optical surface of the male mold half.

**3.**   A method of developing lens power assignments for a series of lenses, said method comprising the step of developing a regression model based on the radii of the optical tools used to form the lens optical surfaces.

**Patentansprüche**

**1.**   Ein Verfahren zum Zuordnen der Stärke zu einer ophthalmischen Linse oder Linsencharge durch Ableiten der Stärke vom Radius der weiblichen und männlichen Stärkeeinsatzwerkzeuge, die verwendet werden, um die weiblichen und männlichen Formhälften zu formen, aus denen die weiblichen beziehungsweise männlichen optischen Oberflächen der Linse oder Linsencharge geformt werden, wobei die Stärke der Linse durch Verwenden eines Regressionsmodells des Radiuses der weiblichen und männlichen Stärkeeinsatzwerkzeuge gegen die Linsenstärke berechnet wird.

**2.** Das Verfahren nach Anspruch 1, wobei die weiblichen und männlichen Stärkeeinsatzwerkzeuge in einer Spritzgießmaschine verwendet werden, um die weibliche optische Oberfläche der weiblichen Formhälfte und die männliche optische Oberfläche der männlichen Formhälfte zu formen.

**3.** Ein Verfahren zum Entwickeln von Linsenstärkenzuordnungen für eine Serie von Linsen, wobei das Verfahren den Schritt des Entwickelns eines Regressionsmodells, basierend auf den Radien der optischen Werkzeuge umfasst, die verwendet werden, um die optischen Oberflächen der Linsen zu formen.

**Revendications**

**1.** Procédé d'attribution de puissance à une lentille ophtalmique ou à un lot de lentilles en dérivant la puissance du rayon des instruments d'insertion de puissance femelle et mâle utilisés pour former les demi-moules femelle et mâle à partir desquels les surfaces optiques femelle et mâle de la lentille ou du lot de lentilles sont formées, respectivement, où la puissance de la lentille est calculée en utilisant un modèle de régression du rayon des instruments d'insertion de puissance femelle et mâle par rapport à la puissance de lentille.

**2.** Procédé selon la revendication 1, dans lequel lesdits instruments d'insertion de puissance femelle et mâle sont utilisés dans une machine de moulage par injection pour former la surface optique femelle du demi-moule femelle et la surface optique mâle du demi-moule mâle.

**3.** Procédé de développement d'attributions de puissance de lentille pour une série de lentilles, ledit procédé comprenant l'étape consistant à développer un modèle de régression basé sur les rayons des instruments optiques utilisés pour former les surfaces optiques de lentille.

FIG.1

FIG.3

FIG.2

EP 1 768 835 B1

FIG.4A

18A

18

20

20A

FIG.4B

8

Measure power inserts

Injection molding of
mold parts

Enter time and measurements into
computer database and assign
unique storage location to mold
parts and label mold parts with
information

Send mold parts to
mold storage at unique
storage location

Receive order for lenses or
lens lot of particular power

Select and pull mold
parts

Computer calculates mold part
dimensions needed for
particular lens order, and selects
mold parts from storage using
power insert regression model
and information stored in
database

Use mold parts to cast
lens

Computer calculates predicted
lens or production lot power
using predictive power
regression model

Lens is labeled for sale
with predicted power

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 687551 A
- US 3985445 A
- US 4283139 A
- US 5175594 A
- US 5123735 A
- US 5432596 A